# EUROPEAN PATENT APPLICATION

(11) **EP 1 880 606 A1**
(43) Date of publication of application: **23.01.2008**
(21) Application number: 06253825.1
(22) Date of filing: 21.07.2006
(51) Int. Cl.: A01K 31/06, A01K 31/10

(54) **Bird cage with small door within large door**

(71) Applicant: Kaytee Products, Inc., Chilton, WI 53014 (US)
(72) Inventor: Glassford, James M., Plymouth, WI 53073 (US)
(74) Representative: Lawrence, John

(57) **Abstract**

A cage (10) having a plurality of side walls, wherein an entire one of the side walls is formed by a wall door (12). The wall door (12) is hingedly attached to a side edge (10d) of an adjacent wall. The wall door (12) may be opened and closed, to provide for easy access to the interior of the cage (10), for cleaning, changing the larger equipment required by larger birds, and for other purposes. The wall door (12) is provided with a small door (14), which covers an opening in some lesser part of the wall door (12), and can be opened and closed independently of the wall door (12).

## Description

### BACKGROUND OF THE INVENTION

The present invention relates generally to cages, and more particularly to a bird cage that has a large door, which constitutes an entire wall. The large door is removably attached by means of hinges along an entire corner edge of the cage. A small door is attached entirely within the large wall door, by means of hinges, and the two doors can be opened and closed independently of each other.

Access to the interior of a bird cage is necessary for bird removal, cleaning, feeding, and for other purposes. Bird cages need doors large enough to enable the birds and objects to be removed and replaced as desired. However, generally speaking, bird cages are made of wire and are not known as models for rugged construction. Thus, an inherent problem of having a large door on a bird cage is further introduction of structural instability in the cage.

Some types of animal containment systems with removable doors are known in the art. For example, U.S. Pat. No. 4,617,873 to Kelmetis discloses a portable cage wherein the four top members are foldable, to permit easier shipping and cleaning; U.K. Pat. No. 787,142 to Smith describes a bird cage having a larger door formed in part of a side wall, which is provided with a smaller door which can be independently opened and closed; U.S. Pat. No. 4,966,097 to Rosenberger describes an animal containment system that is composed of a plurality of enclosures with removable panels.

Most bird cages unfortunately employ a design with a single small door constructed of flimsy wire; such a door is difficult to close, and provides inadequate access to the interior of the cage. Such a cage would be especially inappropriate for larger birds, such a parrots and macaws. Accordingly, there remains a need for a bird cage for larger birds that will have a door large enough to allow easy access to the bird and to the accessories inside the cage, without compromising the structural integrity of the cage. Preferably, the cage should have a plurality of doors capable of being provided in a variety of forms, sizes and shapes, to suit individual preferences. At the same time, the cage should be durable and inexpensive.

### SUMMARY OF THE INVENTION

The present invention is directed to a cage, more specifically to a bird cage, which can easily be cleaned. The invention provides for a cage having a plurality of side walls, wherein an entire one of the side walls is formed by a wall door. The wall door is hingedly attached to a side edge of an adjacent wall. The wall door may be opened and closed, to provide for easy access to the interior of the cage, for cleaning, changing the larger equipment required by larger birds, and for other purposes. This wall door is provided with a small door, which covers an opening in some lesser part of the wall door, and can be opened and closed independently of the wall door. The size and shape of the small door may vary, and may be adjusted according to the size of the cage and of the bird.

Various other features, objects, and advantages of the invention will be apparent from the following detailed description of the invention.

### BRIEF DESCRIPTION OF THE DRAWINGS

FIG. 1 is a perspective view of an embodiment of the invention, showing attachment of a door comprising an entire wall of a bird cage, to a side edge of the cage, with the wall door shown in an open position and having a single, hingedly attached small door in the closed position.
FIG. 2 is a perspective view of the embodiment of the invention shown in FIG. 1, showing the wall door in the closed position.

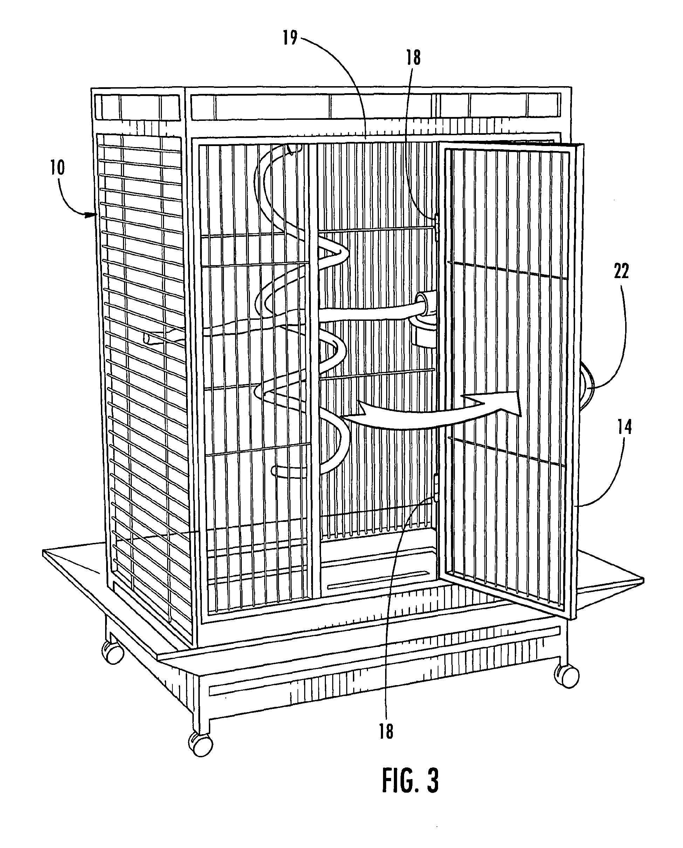

FIG. 3 is a perspective view of the embodiment of the invention shown in FIG. 1, showing the wall door in the closed position and the small door in an open position.
FIG. 4 is a perspective view of another embodiment of the invention, showing a single wall door, but having two smaller doors within the wall door, one of the smaller doors shown in an open position, and the other of the smaller doors shown in the closed position.

### DETAILED DESCRIPTION OF THE INVENTION

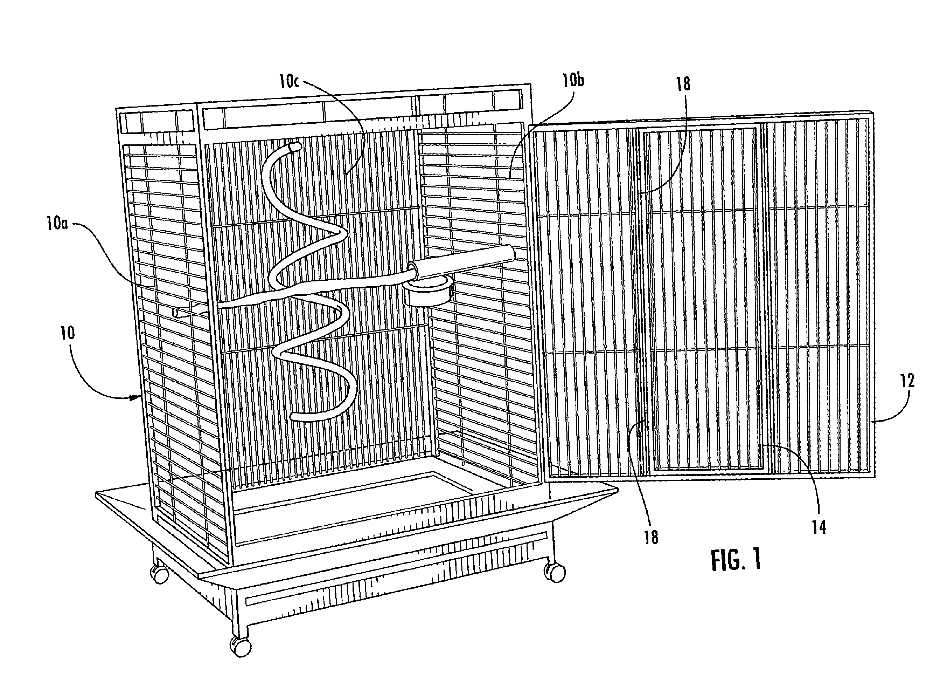

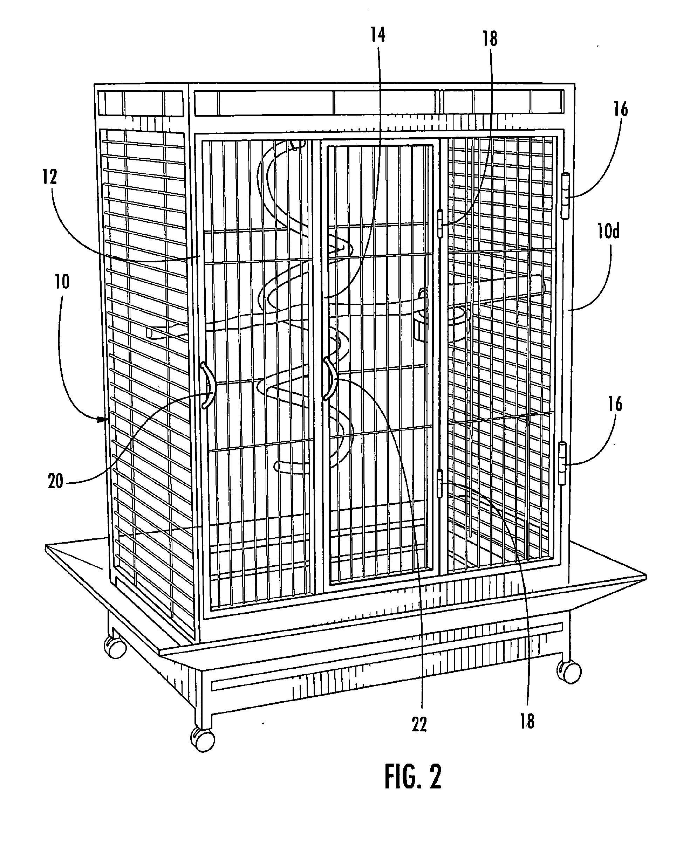

Turning now to the drawing figures, in one embodiment of the present invention, as shown in FIG. 1, a bird cage 10 is constructed with four walls, each substantially flat and planar. The bird cage 10 includes two side walls 10a and 10b, and a rear wall 10c. According to the invention, the entire fourth wall of the bird cage 10 is formed by a wall door 12. The wall door 12 is attached to a vertical side edge 10d of the cage, an edge formed by the junction between the wall door and one of the side walls 10b. As seen best in FIG. 2, in this embodiment the wall door 12 is shown mounted to the side wall 10b using one or more hinges 16.

In the embodiment of the invention shown in FIG. 1, a smaller door 14 can be seen attached to the wall door 12. The smaller door 14 is sized and mounted in an opening in wall door 12 so as to fit entirely within the wall formed by the wall door. In this embodiment, smaller door 14 is hingedly attached to the wall door 12 by means of one or more hinges 18. Both the wall door 12 and the smaller door 14 can be opened and closed independently of each other, allowing ease and flexibility in access to the interior of the cage 10. It should also be noted that the wall door 12, being attached at the side edge 10d of the bird cage 10, adds to or increases structural integrity of the cage as a whole.

A seen in FIG. 2, the wall door 12 may have a door handle 20, to facilitate opening and closing. Similarly, the smaller door 14 may be constructed with a door handle 22, to facilitate opening and closing. A latch or other closure as known in the art may be provided, including friction-based latches, magnetic latches, and actual locks. In this embodiment, the smaller door 14 is shown as centrally located within wall door 12 in terms of the horizontal dimension, with a width of approximately one third of the width of wall door 12, and with substantially the maximum height within a frame 19 which forms the outer edge of wall door 12. It is possible to construct the cage 10 with a smaller door 14 of different shape, size, orientation, and position relative to the wall door 12, without departing from the scope of this invention. For example, in embodiments of the invention not illustrated here, the smaller door 14 could swing open either to the left or the right side, upward, or downward. These embodiments are a function of different positioning of the hinges. The smaller door 14 could even slide in those directions, rather than pivot on hinges.

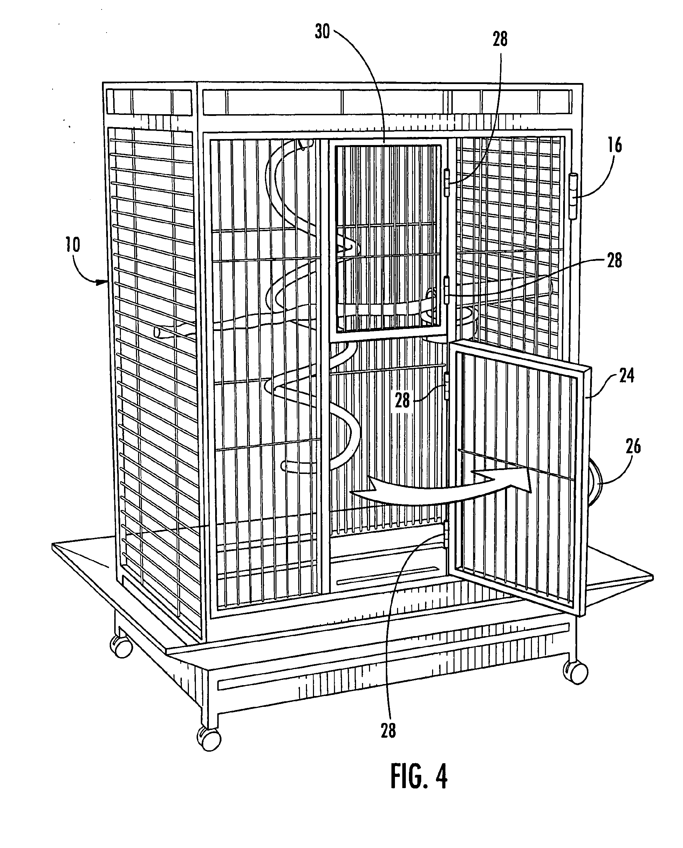

An example of variations in door size and door position can be seen in a different embodiment of the invention, illustrated in FIG. 4. As there shown, this embodiment of the invention provides a bird cage 10 having a wall door 12 with an attached pair of small doors, lower small door 24 and upper small door 30. In this embodiment the two doors 24, 30 are vertically aligned, one above the other. Each of the small doors 24 and 30, as well as the wall door 12, can be independently opened and closed. As in the previously-described embodiment, here the wall door 12 is attached to a side edge 10c of the cage 10 using a pair of hinges 16. Further; each of the small doors 24, 30 is attached to the wall door 12 using a pair of hinges 28. A door handle 26 permits a user to open and close the lower small door 24. It should also be noted that the wall door 12 and the small doors 24 and 30, as well as their respective frames, add to increased structural integrity of the wall, and of the bird cage as a whole.

In this embodiment, the upper small door 30 and the wall door 12 are shown without door handles. It should be understood that the invention is not limited to this illustration, because the small doors 24 and 30 may be manufactured in different sizes, shapes, and forms, with or without door handles, without deviating from the teachings of the invention. For example, the small doors 24 and 30 may differ from each other, as illustrated in FIG. 4, or the small doors may be approximately identical in size, as a reasonable equivalent to the subject matter of the invention. The small doors 24, 30 may be formed with different shapes and ornamentations; they may be rectangular, circular, oval, trapezoid, or any combination thereof.

The type, size, and position of walls and doors used to practice the invention will be determined by, and commensurate with, the size and dimensions of the bird, the bird cage, and the size and shape of accessories that need to be accessed inside the cage. While the embodiments shown in the drawing figures each includes four walls, it is important to understand and realize that a cage could be formed according to the invention using a plurality of walls, including only three walls. Even though the embodiments shown in the drawing figures disclose a door with specific handles, hinges and locks, it is understood that any suitable handles, hinges and locks could be installed on any of the doors shown. It is also important to understand that, even though in the most preferred embodiment the cage 10 is designed for large birds, the cage could also be used for other small animals, in any instance where a large opening is desirable, which large opening is closeable by means of a door, but with the cage still having good structural integrity.

While the invention has been described with reference to preferred embodiments, it is to be understood that the invention is not intended to be limited to the specific embodiments set forth above. It should be recognized that certain substitutions, alterations, modifications, and omissions may be made without departing from the spirit or intent of the invention. Accordingly, the foregoing description of certain embodiments of the invention is meant to be exemplary only, the invention is to be taken as including all reasonable equivalents to the subject matter of the invention, and should not limit the scope of the invention.

## Claims

1. A cage (10) comprising:
a plurality of side walls, wherein an entire one of the side walls forms a wall door (12), and
a smaller door (14) sized and mounted so as to fit entirely within an opening formed for that purpose in the wall door (12).

2. The cage (10) according to claim 1, wherein the cage (10) is a bird cage.

3. The cage (10) according to claim 1 or claim 2, wherein the smaller door (12) is mounted to the wall door (12) by means of hinges (18).

4. The cage (10) according to any preceding claim, wherein the plurality of side walls includes at least four walls.

5. The cage (10) according to any preceding claim, wherein the wall door (12) is hingedly attached to a corner of the wall.

6. A cage (10), comprising:
at least three side walls;
at least one of said side walls being entirely formed by a wall door (12), and
at least one small door (14) removably mounted to an opening formed for that purpose in the wall door (12).

7. A cage (10) as recited in claim 6, wherein the at least one small door (14) is attached to the wall door by means of hinges (18).

8. The cage (10) according to claim 6 or claim 7, wherein the at least one small door (14) is about one-third the size of the wall door (12); or
the cage (10) of any of claims 1 to 6 wherein the smaller door (14) is about one-third the size of the wall door (12).

9. The cage (10) according to claim 6 or claim 7, wherein the at least one small door (14) is about one-sixth the size of the wall door (12); or
the cage (10)of any of claims 1 to 6 wherein the smaller door (14) is about one-sixth the size of the wall door (12).

10. A cage (10) according to any preceding claim further comprising a second small door, also mounted in the opening.

11. A cage (10) according to any one of claims 7 to 10 wherein each of the side walls is substantially flat and planar.

12. A cage (10) as recited in any one of claims 7 to 11 wherein the at least one small door (14) is slidably attached to the wall door (12); or
the cage (10) of any one of claims 1 to 6 wherein the smaller door (14) is slidably attached to the wall door (12).
